# EUROPEAN PATENT APPLICATION

(11) **EP 1 895 687 A1**
(43) Date of publication of application: **05.03.2008**
(21) Application number: 07114859.7
(22) Date of filing: 23.08.2007
(51) Int. Cl.: H04B 10/08

(54) **Fault location in meshed networks**

(30) Priority: 28.08.2006 FR 0653477
(71) Applicant: Alcatel Lucent, 75008 Paris (FR)
(72) Inventor: Vila, Gérard, 91625, NOZAY (FR); Khalfallah, Sabry, 75014, PARIS (FR)
(74) Representative: Shamsaei Far, Hassan

(57) **Abstract**

A method for identifying and positioning the origin of at least one fault in a meshed optical network (1) comprising nodes(2-9), connected to each other through optical line sections (13), a channel being created along an optical path (10) comprising the following successive steps:
- determine the state of maintenance or extinction of said channel at at least one measurement point, by measuring the optical power of said channel at said measurement point (21,31,34-36) of nodes (2-9) on said optical path (10)
- determine at least one defective node or component by comparison of said states, with a predetermined state.

A state change between two measurement points (21,31,34-36) not corresponding to a predicted state change is indicative of a defective node or component between these two measurement points.

A method for identifying and positioning the origin of at least one fault actively uses a controlled extinction of a defective optical channel.

## Description

This invention relates to identification and positioning of the origin of at least one fault in a meshed optical network.

In the domain of the meshed optical networks, it is necessary to be able to detect a fault from a distance and to locate the defective node and the defective component internal to this node.

It is known that this problem can be solved using a technique that consists of applying a unique optical signature to each optical channel at the input to the network, and using this optical signature to monitor, trace and report on the state of said optical channel as it passes through the network. For example, such a technique is developed in the Wavelength Tracker™ product made by the Tropic Networks company. This product is based on modulation of the optical channel by a fixed low frequency sub-carrier with a frequency modulation using a plurality of "tones". A combination of these tones is used to form a unique optical signature of the optical channel. A signature detection is based on a Fast Fourier Transform (FFT) analysis of an extract of a small part of the signal from the optical channel. A tone coder arranged at each network entry point, between an optical emitter and an optical multiplexer, is necessary to add a signature. Tone decoders may be arranged at any point at which a signature detection is useful. Detection of a signature indicates the presence of the optical channel associated with the detection point.

A French patent application No. 0553589 in the name of Alcatel currently pending, describes an alternative method. This solution consists of verifying the origin of each output optical channel at each node to check circuit connectivity. Each channel receives a signature characteristic of the node. Furthermore, this signature is slightly differentiated for each node input port. Thus, a single frequency is used to sign a node, while a phase variation can sign an input port. Thus, two monitoring levels are available for each wavelength; the correspondence between input and output ports can be verified locally (at the node), and a general view of each optical path is also available because the list of nodes through which each channel passes can be constructed.

Solutions according to prior art require the addition of supplementary components including tone encoders and decoders within a node. The main disadvantage of these solutions is firstly a high additional cost due to these components, and secondly additional insertion losses at these components.

This invention overcomes these various disadvantages.

The object of the invention is a method for identifying and positioning the origin of at least one fault in a meshed optical network comprising nodes such as optical add and drop multiplexers, terminal nodes, nodes in X or nodes in Y connected to each other through optical line sections, a channel being created along an optical path comprising an emitting node, a receiving node and adjacent and successive intermediate nodes comprising the following successive steps:
- determining the state of maintenance or extinction of said channel at different measurement points, by measuring the optical power of said channel at each measurement point of the nodes on said optical path,
- determining at least one defective node or component by comparison of said states.

A state change between two measurement points not corresponding to a predicted state change is indicative of defective node or component between these two measurement points.

According to another characteristic of the invention, the state of the channel is determined at external measurement points located at inputs and outputs of said node.

According to another characteristic of the invention, the external measurement points comprise:
- measurement points associated with inputs and outputs belonging to the optical path, and
- measurement points associated with inputs and outputs immediately adjacent to the optical path.

According to another characteristic of the invention, the state of the channel is once again determined at internal measurement points indicative of the different internal optical paths in said node.

According to another characteristic of the invention, the internal measurement points comprise:
- measurement points belonging to the optical path, and
- measurement points immediately adjacent the optical path.

According to another characteristic of the invention, a sequence of steps for:
- selecting one of the nodes on said optical path,
- extinction of emission of said channel at said selected node
is done before the step of determining the state.

According to another characteristic of the invention, said selected node is the emitting node.

According to another characteristic of the invention, the step of determining the state is only done for nodes downstream of said selected node.

According to another characteristic of the invention, the step of determining the state is only done for the first node that detected absence or interruption of service in said channel and for nodes upstream of these nodes.

According to another characteristic of the invention in the case of a multiple broadcast, the extinction of the emission is done downstream of the broadcast multiplier.

According to another characteristic of the invention, the emission is only extinguished for a defective branch.

According to another characteristic of the invention, the method comprises the following sequence of steps:
- selecting one of the nodes on said optical path,
- if necessary, activating emission of said channel at said selected node,
- first determination of the state,
- extinction of emission of said channel at said selected node,
- second determination of the state at the same measurement points,
in which at least one defective node or component is determined by comparison of the states determined during the first and second determination.

According to another characteristic of the invention, the step to determine the state is only done for measurement points internal to said selected node.

According to another characteristic of the invention, after said node has been selected, a first sub-sequence of activation/extinction of said channel is done before a first step to determine the applied state at internal measurement points in said selected node belonging to the optical path, a second sub-sequence to activation/extinction of sub-channel is done before a second step to determine the state applied to measurement points internal to said adjacent selected node.

According to another characteristic of the invention, the method is initiated following detection of the absence or interruption of service in said channel.

According to another characteristic of the invention, the absence or interruption of service is detected by the detection of a loss of signal (LOS), loss of frame (LOF), or trace identifier mismatch (TIM).

The invention also relates to a node for a meshed optical network such as a multiplexer with optical add and drop, a terminal node, a node in X or a node in Y, capable of using the method for identifying and positioning the origin of at least one fault according to one of the previous embodiments.

One advantage of the invention is that it allows to identify a defective node in an optical path.

Another advantage of the invention is that it allows to identify a defective component within a node.

Another advantage is that it allows to identify different types of failures such as a cabling error, component failure, etc.

Another advantage of the invention is that allows to detect multiple failures.

Another important advantage of the invention is that it is not disturbing, in that the method can be used only on already faulty parts on the optical path, without disturbing parts on the optical path that are still functional.

Other characteristics, details and advantages of the invention will become clearer from the detailed description given below for guidance with reference to the drawings in which:
- figure 1 illustrates an example of a meshed network,
- figure 2 illustrates an example of a node in X,
- figures 3, 4, 5 illustrate different uses of a node in X.

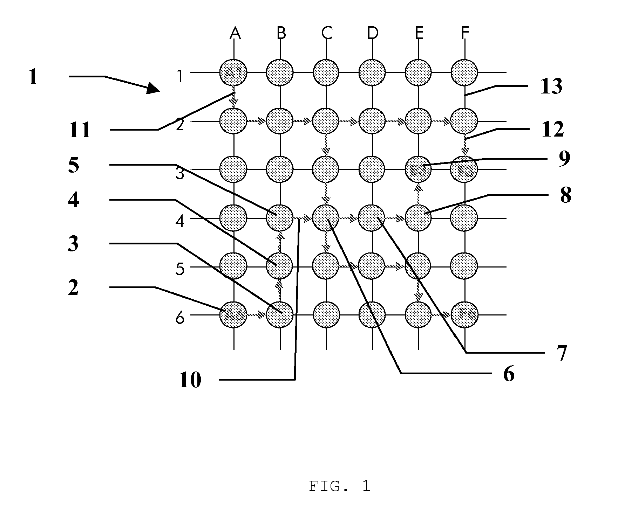

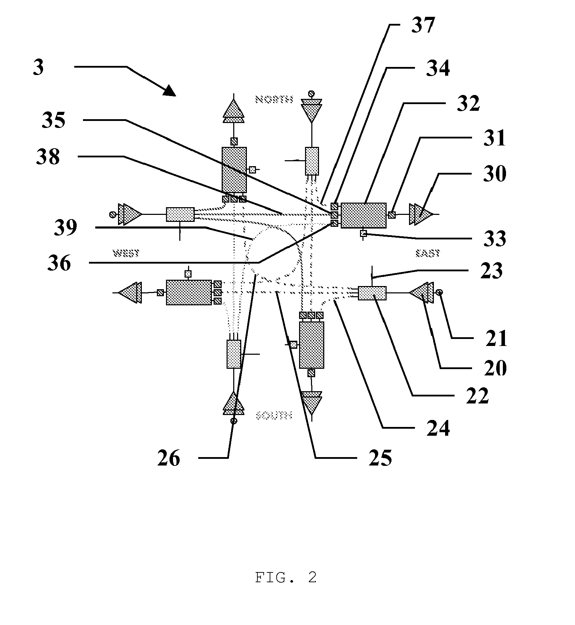

Figure 1 shows an example of a meshed network 1. This network is composed of nodes in X of the type shown in detail in Figure 2. These nodes 2-9 are arranged in a matrix for clarity of the presentation, in which the rows are identified by numbers and the columns by letters, a node being indicated by mentioning its column and its row. Thus, node 2 located at the intersection of the first column (A), and the sixth row (6) is identified as A6. This illustrative network also includes terminal nodes along the edge of the network. A6 is a terminal node. Nodes are connected to each other through optical line sections 13. A first channel is created along an optical path 10 represented by successive arrows. This optical path 10 connects an emitting node 2 (A6) to a receiving node 9 (E3) through adjacent and successive intermediate nodes 3-8 (B6, B5, B4, C4, D4, E4). A second optical path 11 is also shown that connects node A1 to node F6. Those skilled in the art will clearly understand that any other topology for the meshed network 1 would be possible and that the invention remains applicable. Similarly, a node in X is used in this description for illustrative purposes. Network nodes may be any type of network element interconnecting at least one section of optical lines 13. Such nodes 2-9 or network elements may be optical Add and Drop multiplexers (OADM), and they may be reconfigurable (R-OADM) or Tuneable (T-OADM), terminal nodes along the edge of the network interconnecting at least one optical line section 13, nodes in Y interconnecting three optical line sections 13 or nodes in X interconnecting four optical line sections 13. These nodes 2-9, that may be of different types within the same network 1, are connected by optical line sections 13 comprising optical fibres. An optical channel carried by a given wavelength supported by a support optical path 10, 11 within such a network 1, can pass through a large number of nodes 2-9. These nodes 2-9 offer multi-connectivity to the network 1, due to their reconfigurability.

Figure 2 shows details of an internal view of a node 2-9 of the node in X type. Such a node 3 interconnects four optical line sections 13 identified by the cardinal directions North (N), East (E), South (S) and West (O) respectively. Correspondingly, the node 3 comprises four identical sub-sets each interfacing one of the four optical line sections and consequently identified as North, East, South and West. Only the east sub-set is described with reference to figure 2, for simplification reasons. If necessary, a numeric reference is indexed using the initial of the cardinal direction. Thus, reference 20 denotes an input generically, while 20N denotes the North input. The East sub-set comprises an input block 20-26 and an output block 30-39. An optical channel enters into node 3 through an input 20. This input 20 may comprise a measurement point 21 that may be arranged downstream of the input 20 or advantageously upstream as shown. The channel then passes through a multiplexer 22 that replicates the channel to the other sub-sets, in this case South, West and North, through three optical guides or fibres 24, 25, 26 respectively. This multiplier 22 may optionally be provided with a Drop port 23. Symmetrically, optical channels from the other inputs North, West and South reach a selector 32 through the corresponding optical guides 37, 38, 39. Measurement points 34, 35, 36 may advantageously be arranged on each of the optical guides 37, 38, 39 respectively. Optionally, a selector 32 may be provided with an Add port 33. The channel output from the selector 32 reaches an output 30. This output 30 may comprise a measurement point 31 that may be located downstream of the output 30 or advantageously upstream as shown.

The multiplier 22 systematically replicates every channel received at the input, onto all its outputs. On the contrary, the selector only transmits a single instance of a particular channel that occurs simultaneously on its different input ports, to its output, depending on the programmed routing. Channels are routed through the network 1 by selector components 32. Thus, the optical channel supported by the optical path 10 as it passes through the node 3 arrives through the South input and must be routed to the North output. The South multiplier 22S replicates the channel to the three selectors 320, 32N and 32E. Only the North selector 32N is programmed to transmit said channel to the North output 30N, while the two other selectors 320 and 32E block (do not transmit) said channel. Thus, an appropriate configuration of the selectors 32 can be used to define optical paths through the network 1. Alternatively, a selector 32 may transmit a channel received directly through its Add port 33, to the output 30. A node 3 like that described above operates according to the so-called broadcast-and-select principle. It would be equivalent to considering a principle in which routing would be done at the multipliers 22. The invention is applicable to a network using such a principle, provided that minor adaptations are made that are within the expertise of a person skilled in the art. One advantage of a network meshed in this way is that several optical paths can be defined that connect two given nodes. Thus, if there is a failure in an intermediate node 3-8 or an optical line section 13 connecting two such nodes 3-8, a reconfiguration of the selectors 32 provides a means of redefining a new optical path connecting said two nodes, avoiding the defective point. For example, the network may use the principle of Dense Wavelength Division Multiplexing (DWDM). Each optical channel uses a given wavelength. Different channels can be multiplexed in frequency so as to share a single optical support at a given moment.

Each node 2-9 on the optical path 10 can also cause bad routing in which an optical channel is interrupted. Similarly, many components 20, 22, 24-26, 30, 32, 37-39 can cause a failure within a node. When an absence or interruption of service is detected for an optical channel, it is difficult to determine the source of the problem and to locate it. The method according to the invention proposes a method of identifying and positioning the origin of one or several faults within such a meshed network 1. The principle of the method consists of determining an operating state for a given optical channel. This state may be equal to one of two values, namely "maintain" when the wavelength of said channel is detected, and "extinction" when said wavelength is absent or is insufficiently strong. This is done by measuring the optical power at at least one measurement point 21, 31, 34-36 of each of the nodes 2-9 on said optical path 10. Depending on the measured optical power for said wavelength and possibly use of a thresholding, a binary state is determined among the maintain and extinction values. A comparison of the states thus determined enables a failure diagnostic based on the following principle: the change in state between two measurement points is compared with the predicted change in state. If these two changes do not correspond, this signals a failure located between these two measurement points. In this case, the change in state refers to a change of state between the first and the second measurement points, or an identical state between the two measurement points. In other words, the change in state denotes the pair of the two corresponding states of the two points. The real value of said pair of state values is compared with the predictive or normally expected value.

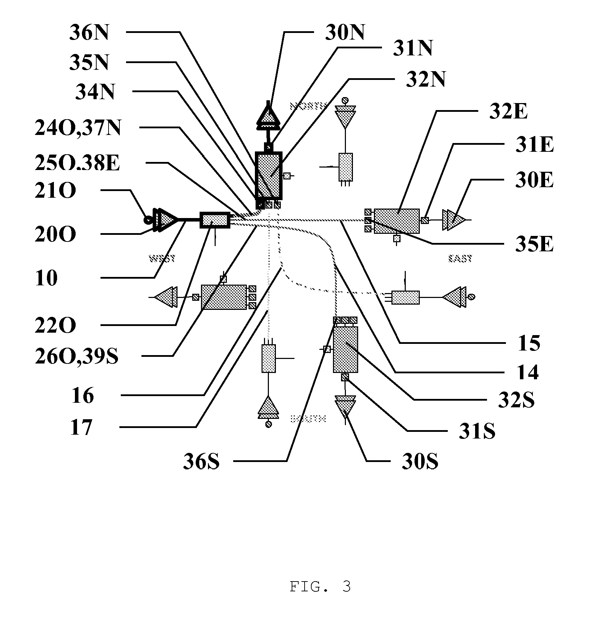

A single measurement point per node can be used, for example the measurement point 21 of input 20 used by the optical path 10. With reference to figure 1, an active channel emitted from node 2 (A6) to the receiving node 9 (E3) along the optical path 10 produces a "maintain" state at the measurement point 21 of each node 2-9 if all nodes are operational. No state change is predicted from one measurement point to the other. All predicted state changes are (maintain, maintain) pairs. An "extinction" state appearing at node 7 (D4) for the first time (while a "maintain" state is observed at the previous node 6 (C4)) creates a change of state (maintain, extinction) that does not correspond to the predicted change of state and forms an unexpected change between these two measurement points 21, indicating a failure between these two measurement points 21, in this case a failure of node 6. Such an unpredicted change occurs when a predicted or expected change of state (extinction to maintain, or maintain to extinction) does not occur or when no change of state (identical state at two points) is not confirmed by the measurement. Similarly, if several measurement points are used within a node 3, an unpredicted change of state indicates a failure of a component located between these two measurement points. Thus for example, with reference to figures 2 and 3, a change of state not corresponding to the expected change that does not predict any change of state between point 210 and point 34N indicates a fault at the input 200, the multiplier 220 or the West-North optical guide 240 (also referenced 37N). A state change between one of the points 34, 35 or 36 and point 31, while no change is normally predicted, indicates a fault in the selector 32. The predicted change is determined as a function of the normally expected operation of the node or components as known by a person skilled in the art who will know how to determine it. The comparison is always made along a possible optical path, in other words between two measurement points actually connected by an optical path or that could be connected by an optical path that could be created following a routing configuration error.

The above example showed that a single measurement point can be used per node. However, an increase in the number of measurement points enables more precise localisation of the fault. In a first embodiment, the state of the channel is determined at external measurement points 21, 31 located at the input 20 and the output 30 respectively of a node through which said channel passes. This enables a diagnostic localising a fault in a node 2-9 when an unexpected change in state is observed between an input 20 and an output 30 of the same node, in the direction along which the optical channel runs. The failure is located in an optical line section 13 when the unexpected change is observed between an output 30 from one node and an input 20 to a next node. These measurement points 21 and 31 are called external due to their location at the periphery of the node.

According to one optional characteristic of the method, it is useful to make a distinction between external measurement points 21, 31 associated with inputs 20 and outputs 30 belonging to the optical path 10, and measurement points 21, 31 associated with inputs 20 and outputs 30 immediately adjacent to the optical path 10. Thus, with reference to figure 3 in which only the optical path and the adjacent paths 14, 15 are shown, the optical channel supported by the optical path 10 normally passes through node 3 entering from the West and exiting through the North. In this case, the optical path 10 shown in thicker lines includes the West input 200, the West multiplier 220, the West-North optical guide 240, the North selector 32N and the North output 30N. The corresponding measurement points, namely 210, 34N and 31N belong to the optical path 10. The external measurement points belonging to the optical path 10 are points 210, 31N. An observation of the state of these measurement points provides a means of monitoring the optical path 10 as configured. However, the multiplier also transmits to the other directions East and South. These adjacent directions or paths 14, 15 may be the source of errors. The first adjacent path 15 comprises the West-North optical guide 250 (or 38E), the selector 32E, the measurement point 35E, the output 30E, the measurement point 31E. The second adjacent path 14 comprises the West-South optical guide 260 (or 39S), the selector 32S, the measurement point 36S, the output 30S, the measurement point 31S. Thus, a "maintain" state observed at the South output 30S while the channel should be blocked indicates a malfunction or bad configuration of the South selector 32S, and a "maintain" state observed at the East output 30E while the channel should be blocked indicates a malfunction or bad configuration of the East selector 32E. There are other adjacent paths within a node 3. Thus the paths 16, 17 leading to the North selector 32N from the other East and South directions can be used to detect or identify errors. External measurement points immediately adjacent to the optical path 10 are points 31E, 31S and measurement points 21E, 21S. An observation of these measurement points located on adjacent paths 14-17 can provide a means of detecting configuration or operating errors.

The use of internal measurement points 34-36 allows advantageously to determine details of a diagnostic at the constituent components of a node 3. Different internal optical paths inside a node 3 are composed of the different paths participating in the optical path 10 or the neighbours 14-17 of this optical path. Thus, internal measurement points 34-36 arranged at different points on these different paths 10, 14-17 can be used comparatively to determine the location of a fault, a configuration error or a cabling error. These internal measurement points are advantageously arranged between the multipliers 22 and the selectors 32 at the optical guides 37-39. Let N be the number of optical line sections interconnected by a node 3 (N=4 for a node in X),then N*(N-1) measurement points (namely twelve for a node in X), enable observation of N*(N-1) optical guides 37-39. These points may be arranged at any point along an optical guide 37-39. However, they are advantageously joined with one of the components, either at the output from the multiplier 22 or advantageously at the input to the selector 32 (as shown in figures 2 or 3). Other measurement points are possible at any point along the path, for example such as between an input 20 and a multiplier 22. Thus, while external measurement points 21, 31 alone are sufficient to determine a fault of a complete path (from an input 20 to an output 30), a comparison extended to include internal measurement points 34-36 is sufficient to distinguish each segment located between two measurement points along a path.

As mentioned above for external measurement points 21, 31, a distinction can be made among internal measurement points 34-36 of measurement points belonging to the optical path 10, and measurement points (or points belonging to adjacent paths 14-17) immediately adjacent to the optical path 10. Considering the above example, the internal measurement points belonging to the optical path 10 are reduced to the point 34N. Internal measurement points immediately adjacent to the optical path 10 are points 35E, 36S, 35N and 36N.

The first sequence of steps in the method as described above does not require any action on the network 1, its nodes 2-9 or their components. Therefore this first sequence in the method does not create any disturbance. However, these steps cannot give a sufficiently precise diagnostic, as will be described later.

It is remarkable to observe that extinction for a channel with a failure does not disturb operation of said channel further. This observation is used during a second sequence in which extinction of the defective channel is provoked deliberately. This second sequence can take place independently or in addition to the first sequence or even conditionally when the first sequence did not allow for identifying a failure. This second sequence comprises a selection of one of the nodes 2-9 on the optical path 10 supporting an optical channel. Extinction of the emission of said channel is provoked at the node thus selected. For example, such an extinction can be obtained by setting one of the components such as the multiplier 22 or the selector 32 into a blocked state so that it does not transmit the said channel. As mentioned above and with all the variants described above, the state is determined at the different measurement points 21, 31, 34-36. The comparison between the states thus obtained and the predicted states provides the means of making failure localisation diagnostics. The additional extinction thus provoked offers a means of providing further information about the state that cannot be determined from the first sequence. An "extinction" state is predicted along the entire optical path 10 downstream of the node selected for extinction. Therefore the determination of a "maintain" state at one of the measurement points downstream the selected node indicates a fault. A combination of comparative state information before extinction (first sequence) and after extinction (second sequence) can further improve the diagnostic, since a change of state of all measurement points downstream the selected node should be observed.

It is possible to select any node 2-9 on the optical path. It is advantageous to select the node furthest upstream the optical path 10, namely the emitting node 2, so as to obtain the maximum possible amount of information.

On the other hand, in order to limit the number of operations to be done, it is advantageous to select a node close to but upstream a node assumed to be in fault, for example following the first sequence. It is quite clear that determining the state only provides useful information for measurement points located in nodes downstream said selected node and it is advantageous to limit determination of the state at these points downstream of the selected node. Thus, selecting a node closer to the receiving node 9 while remaining upstream the node in fault can advantageously limit the number of operations to be performed.

A node may be the source of the detection of absence or interruption of service in said channel according to the means described later. The node or component in fault is necessarily located upstream said node at the origin of the detection. Consequently, determination of the state is advantageously limited to points located in nodes located upstream said node.

It is possible that a channel is multiplied to perform a multiple broadcast. This is illustrated by the optical path 11 in figure 1. This optical path 11 begins at A1, separates at C2 into a first branch that continues as far as F6 and a second branch that continues as far as F3. The multiplier 22 of C2 makes multiplication possible. The channel is duplicated at C2 to the East and to the South. The corresponding selectors 32E and 32S are then configured to transmit the channel while the North selector 32N blocks the channel. If there is a failure in such a channel, assuming that the failure occurs at a node, for example E2, downstream the multiplier 22 providing multiple broadcast within the multiplier node C2, it is advantageous not to interrupt the part of the channel that continues to function, in this case the branch from A1 to F6. To achieve this, the extinction operation is advantageously done at a node selected downstream said broadcast multiplier 22 of C2.

In the same case, the emission is advantageously extinguished by selecting a node within the branch 12 in fault. Said branch 12 in fault is the branch output from the multiplier node (not including this node) and containing the node in fault. In this case it includes nodes D2, E2 F2, F3.

According to a third sequence, the method includes steps to select one of the activation nodes 2-9 on the optical path 10, if the channel had been extinguished during a previous step, followed by a first determination of the state according to all the variants described above, followed by extinction, followed by a second determination of the state according to all the variants described above. The second determination of the state is done at the same measurement points as the first determination of the state. A node or component in fault can then be determined by comparison of states determined relating to predicted state changes during two state determinations and by comparison between states determined during the two state determinations.

The third sequence is particularly useful to eliminate some doubts about the diagnostic when it is done only for measurement points 34-36 internal to said selected node. This is particularly advantageous when said node is the node in fault previously determined by another operation.

According to another characteristic of the invention, after the node has been selected, a first sub-sequence of activation/extinction of said channel is advantageously done in two successive steps, accompanied by determinations of the state applied to measurement points 34-36 internal to said selected node belonging to the optical path 10, followed by a second activation/extinction sub-sequence of said channel accompanied by determinations of the state applied to adjacent internal measurement points 34-36. Alternatively, it is possible to make a single activation/extinction sub-sequence of said channel and to perform state determinations applied both to the measurement points 34-36 internal to said selected node belonging to the optical path 10, and to adjacent internal measurement points.

Each of the three sequences described above may be used alone to perform all or some of the identification and localisation of the origin of at least one fault. It is quite clear to a person skilled in the art that the method can be used equally well to identify and locate a single fault or multiple faults. A particularly advantageous combination consists of doing the first sequence, conditionally followed by the second sequence to determine the defective node, followed by the third sequence. In most cases, the first sequence is used to locate the defective node(s). Otherwise, application of the second sequence can systematically determine the defective node(s). Application of the third sequence after the second sequence, advantageously limited to the node(s) in fault determined above, provides a means of clarifying the location by identifying the component(s) in fault within said node in fault.

Since the method according to the invention may be disturbing during the channel extinction step that occurs only within the framework of the second or the third sequence, it is advantageously not initiated until detection of the absence or interruption of service in said channel. An absence of service reveals a channel that was never been set up. On the other hand, an interruption denotes a channel that had previously been set up but that has subsequently disappeared. The resulting diagnostic may be different.

An absence or interruption of service may be detected by different means. These means may include detection of a Loss Of Signal (LOS), Loss Of Frame (LOF), or Trail Trace Identifier Mismatch (TIM). The first means, LOS, detects a loss of optical power at a receiver. The second means detects a loss or a fault on reception, during logical decoding of a signal. An identifier TTI (Trail Trace Identifier) is associated with each channel. When a channel uses a given wavelength, it is possible to detect a divergence of this identifier which indicates that another channel is using the same wavelength. This divergence is called TIM.

The invention also relates to a node for a meshed optical network comprising means of using the method for identifying and positioning the origin of at least one fault according to any one of the previously described embodiments.

Some examples are given below in order to illustrate the invention further and its scope.

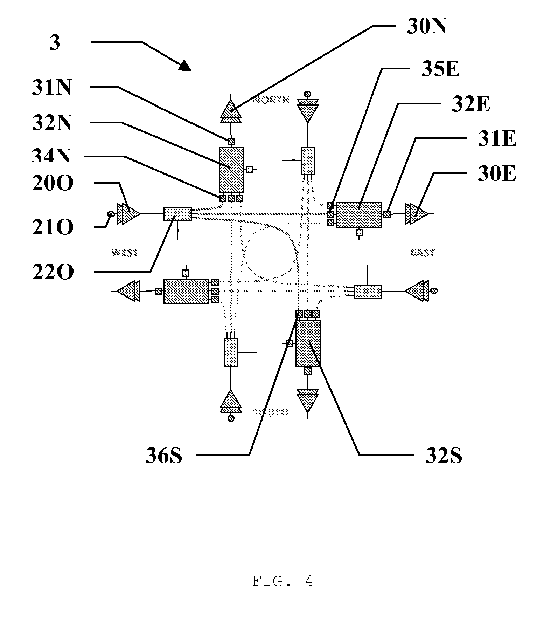

According to a first example, with reference to figure 1, the optical path 10 connecting A6 to E3 shows a loss of signal (LOS) detected at node E3. A verification of the corresponding channel along said optical path 10, beginning at the emitting node A6, reveals normal states as far as node D4. At D4, the channel is received correctly on the West input, but is no longer detected on the East output. It is then obvious that D4 is the node in fault. A complementary observation of the adjacent North and South outputs from D4 can provide clues about the nature of the fault. Thus, detection of a maintained channel on the North output would indicate bad routing configuration. Following the fault, the channel emitted by A6 no longer reaches E3. The emitter can then be off for the wavelength of said channel without causing any additional disturbance. Within the node D4 in fault, observation of the state combined with said extinction reveals the origin of the fault. Now with reference to figure 4, after the extinction, the channel entering through the West input 200 is no longer detected at the measurement points 210, 34N, 35E, 36S, indicating that cabling through the optical guides 37N/240, 38E/250 and 39S/260 between the multiplier 220 and the selectors 32N, 32E, 32S is correctly set up. The absence of an East output channel 30E detected at the measurement point 31E when the channel was on revealed failure or bad configuration of East selector 32E. Extinction of the North output channel 30N detected at the measurement point 31N consecutive to extinction of the channel also reveals a fault or bad configuration of the North selector 32N. In this case bad configuration of the node is highly probable because a simultaneous double fault of the two selectors 32E and 32N is highly improbable.

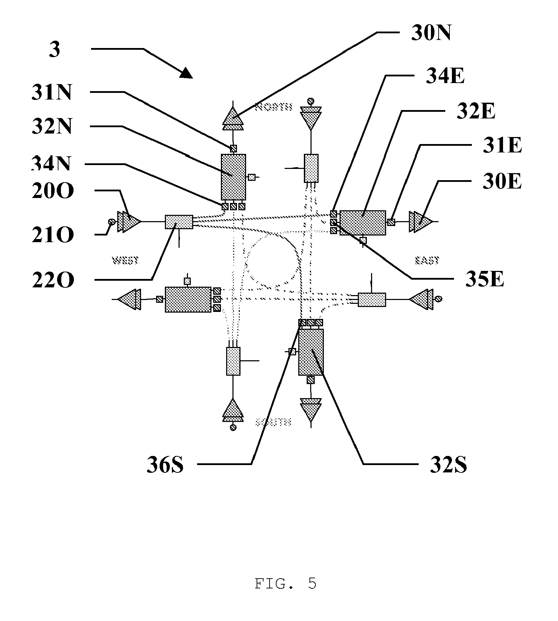

According to a second example, with reference to figure 5, within a node 3 in fault, the channel is not detected after extinction at the measurement points 210, 34N, 36S, thus indicating correct cabling to the North and South. However, extinction of the channel can be observed at 34E instead of the predicted 35E. This reveals and locates a cabling error at the input to the East selector 32E in which two optical guides have been inverted, as shown in figure 5.

According to a third example, a Trace Identifier Mismatch TIM is detected by the node E3, indicating reception of an unexpected signal, the same wavelength carrying a signal different from the expected signal. In such a case, application of the first sequence according to the method does not reveal any fault because the channel wavelength is present and can be observed at different measurement points with a normal optical power. On the other hand, the second sequence advantageously using channel extinction, identifies the node in fault. The channel emitted from A6 does not reach E3 and can be extinguished without prejudice. Observation of states at measurement points along the optical path 10 after extinction of the channel indicates everything is normal as far as node C4. In node C4, the channel is received correctly at the West input 210 and disappears during the extinction. But it persists to the East regardless of the state of the emission. C4 is then the node in fault. With reference to figure 4, an observation within the defective node C4 combined with extinction of the channel provides the means of positioning the origin of the failure. After the extinction, an extinction state corresponding to the expected state can be observed at measurement points 210, 34N, 35E and 36S, indicating correct cabling of the optical guide. However, the channel does not disappear at the East output point 31E 30E, indicating that the East selector 32E does not send the channel signal to the output, but sends another signal with the same wavelength present on another input (37E or 38E). This reveals a fault or bad configuration of the East selector 32E.

According to a fourth example based on the optical path 11 with a multiple broadcast and with reference to figure 1, a loss of signal is detected at node F3. Since the channel circulates correctly in the other branch A1-F6, it is preferable not to extinguish the channel upstream the multiplier node C2. However, the method is applicable by applying an extinction on one of the nodes on the branch in fault upstream the node supposed to be in fault, namely at C2 (through selector 32E), D2 or E2.

## Claims

1. Method for identifying the origin of at least one fault in a meshed optical network (1) comprising nodes (2-9), connected to each other through optical line sections (13), a channel being created along an optical path (10) comprising an emitting node (2), and a receiving node (9), and one or several intermediate node(s) (3-8), **characterised in that** it comprises the following successive steps:
- determining the state of maintenance or extinction of said channel at at least one measurement point, by measuring the optical power of said channel at said measurement point (21, 31, 34-36) of nodes (2-9) on said optical path (10)
- determining at least one defective node or component by comparison of said states, with a predetermined state.

2. Method according to claim 1, in which a state change between two measurement points (21, 31, 34-36) not corresponding to a predicted state change is indicative of a defective node or component between these two measurement points.

3. Method according to claim 1 or 2, in which the state of the channel is determined at external measurement points (21, 31) located at the input (20) and the output (30) of said node.

4. Method according to claim 3, in which the external measurement points (21, 31) comprise:
- measurement points (21, 31) associated with inputs (20) and outputs (30) belonging to the optical path (10), and
- measurement points(21, 31) associated with inputs (20) and outputs (30) immediately adjacent to the optical path (10).

5. Method according to any one of claims 1 to 4, in which the state of the channel is once again determined at internal measurement points (34-36) indicative of the different internal optical paths in said node.

6. Method according to claim 5, in which the internal measurement points (34-36) comprise:
- measurement points (34-36) belonging to the optical path (10), and
- measurement points (34-36) immediately adjacent the optical path (10).

7. Method according to any one of claims 1 to 6, wherein a sequence of steps for:
- selecting one of the nodes (2-9) on said optical path (10),
- extinction of emission of said channel at said selected node (2-9)
is done before the step of determining the state.

8. Method according to claim 7, in which said selected node is the emitting node (2).

9. Method according to claim 7 or 8, in which the step of determining the state is only done for nodes dowstream said selected node.

10. Method according to any one of claims 7 to 9, in which the step of determining the state is only done for the first node that detects absence or interruption of service in said channel and for nodes on the input side.

11. Method according to any one of claims 7 to 10, where in the case of a multiple broadcast, the emission is extinguished downstream the broadcast multiplier (22).

12. Method according to claim 11, in which the emission is only extinguished for a defective branch (12).

13. Method according to any one of claims 1 to 6, comprising the following sequence of steps:
- selecting one of the nodes (2-9) on said optical path (10),
- if necessary, activating emission of said channel at said selected node,
- first determination of the state,
- extinction of emission of said channel at said selected node,
- second determination of the state at the same measurement points,
in which at least one defective node or component is determined by comparison of the states determined during the first and second determination step.

14. Method according to claim 13, in which the step of determining the state is only done for measurement points(34-36) internal to said selected node.

15. Method according to claim 13 or 14, in which after selection of said node,
- a first sub-sequence of activation/extinction of said channel is done accompanied by determinations of the state applied to measurement points (34-36) internal to said selected node belonging to the optical path (10),.
- a second sub-sequence of activation/extinction of said channel is done accompanied by determinations of the sates applied to measurement points (34-36) internal to said adjacent nodes.

16. Method in which the following steps are performed:
- a first sequence according to any one of claims 1 to 5,
- if this sequence does not provide means of determining a defective node, a second sequence is done according to any one of claims 6 to 11,
- a third sequence, according to any one of claims 12 to 14, so as to determine a defective component within the previously determined defective node.

17. Method according to any one of the previous claims, initiated following detection of an absence or interruption of service in said channel.

18. Method according to claim 17, in which absence or interruption of service is detected using detection of a loss of signal, LOS, loss of frame, LOF, or trace identifier mismatch, TIM.

19. Node for a meshed optical network such as an add and drop multiplexer, a terminal node, a node in X or a node in Y, adapted for using the method for identifying and positioning the origin of at least one fault according to any one of claims 1 to 18.
